(19) Europäisches Patentamt
European Patent Office
Office européen des brevets

(11) **EP 2 402 947 A1**

## (12) EUROPEAN PATENT APPLICATION

(43) Date of publication:
**04.01.2012 Bulletin 2012/01**

(51) Int Cl.:
*G11B 7/095* (2006.01)    *G11B 7/135* (2012.01)

(21) Application number: **11166077.5**

(22) Date of filing: **13.05.2011**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **30.06.2010 JP 2010149581**

(71) Applicant: **Sony Corporation**
**Tokyo 108-0075 (JP)**

(72) Inventors:
- **Sagara, Seiichi**
  **Minato-ku Tokyo 108-0075 (JP)**
- **Uemura, Kamon**
  **Minato-ku Tokyo 108-0075 (JP)**
- **Yonezawa, Takeshi**
  **Minato-ku Tokyo 108-0075 (JP)**

(74) Representative: **Davies, Simon Robert**
**D Young & Co LLP**
**120 Holborn**
**London, EC1N 2DY (GB)**

### (54) Playback device, playback method and program

(57) There is provided a playback device (1) including an adjustment portion (102) that, based on a first data recording surface (L0) among a plurality of data recording surfaces of an optical recording medium (2), adjusts tilt with respect to the first data recording surface (L0), an adjustment amount measurement portion that measures a first tilt adjustment amount from a result of the tilt adjustment, an acquisition portion (104) that acquires a coma aberration of the playback device (1), and a calculation portion (104) that, based on the first tilt adjustment amount and the coma aberration, calculates a second tilt adjustment amount to adjust tilt with respect to a second data recording surface (L1) that is different to the first data recording surface.

**FIG.1**

**Description**

The present invention relates to a playback device, a playback method and a program.

Coma aberration occurs due to tilt of an objective lens of an optical pickup used in the recording and reproduction of an optical recording medium (an optical disc) or due to tilt of the optical disc. To minimize coma aberration, the tilt of the objective lens and the tilt of the optical disc etc. are adjusted.

Technology is disclosed in, for example, Japanese Patent Application Publication No. JP-A-2005-209283, that corrects spherical aberration and coma aberration in order to obtain favorable spot characteristics on any information recording surface of a multi-layer optical recording medium.

In this case, with a multi-layer optical recording medium that has a plurality of information recording surfaces, when correcting coma aberration, adjustment time increases significantly when correcting each layer at a time. For example, when the optical disc has four layers of information recording surfaces, adjustments are performed four times, and the adjustment time increases in comparison to an optical disc that has one layer or two layers.

Further, in Japanese Patent Application Publication No. JP-A-2005-209283, initial coma aberration is not taken into consideration. Here, initial coma aberration is coma aberration caused by the objective lens etc., occurring in the manufacture of an optical pickup. Therefore, in Japanese Patent Application Publication No. JP-A-2005-209283, precision is not sufficient in practical use.

Various respective aspects and features of the invention are defined in the appended claims. Combinations of features from the dependent claims may be combined with features of the independent claims as appropriate and not merely as explicitly set out in the claims

According to an embodiment of the present invention, there is provided a playback device including an adjustment portion that, based on a first data recording surface among a plurality of data recording surfaces of an optical recording medium, adjusts tilt with respect to the first data recording surface, an adjustment amount measurement portion that measures a first tilt adjustment amount from a result of the tilt adjustment, an acquisition portion that acquires a coma aberration of the playback device, and a calculation portion that, based on the first tilt adjustment amount and the coma aberration, calculates a second tilt adjustment amount to adjust tilt with respect to a second data recording surface that is different to the first data recording surface.

The calculation portion, based on the first tilt adjustment amount, the second tilt adjustment amount and the coma aberration, may calculate a third tilt adjustment amount to adjust tilt with respect to a third data recording surface that is different to the first data recording surface and the second data recording surface.

The acquisition portion may acquire the coma aberration by directly measuring coma aberration of an objective lens of the playback device.

When an objective lens is tilted and fixed, the acquisition portion may measure remaining coma aberration as lens tilt and acquires the coma aberration.

The calculation portion, based on the second tilt adjustment amount and the coma aberration, may calculate a third tilt adjustment amount to adjust tilt with respect to a third data recording surface that is different to the first data recording surface and the second data recording surface.

According to another embodiment of the present invention, there is provided a playback method, including the steps of adjusting tilt with respect to a first data recording surface, based on the first data recording surface among a plurality of data recording surfaces of an optical recording medium, measuring a first tilt adjustment amount from a result of the tilt adjustment, acquiring a coma aberration of the playback device, and calculating a second tilt adjustment amount to adjust tilt with respect to a second data recording surface based on the first tilt adjustment amount and the coma aberration, the second data recording surface being different to the first data recording surface.

According to another embodiment of the present invention, there is provided a program comprising instructions that command a computer to perform the steps of adjusting tilt with respect to a first data recording surface, based on the first data recording surface among a plurality of data recording surfaces of an optical recording medium, measuring a first tilt adjustment amount from a result of the tilt adjustment, acquiring a coma aberration of the playback device, and calculating a second tilt adjustment amount to adjust tilt with respect to a second data recording surface based on the first tilt adjustment amount and the coma aberration, the second data recording surface being different to the first data recording surface.

Accordingly the approach described herein helps to rapidly adjust tilt and reduce coma aberration in a multi-layer optical recording medium.

Embodiments of the invention will now be described with reference to the accompanying drawings, throughout which like parts are referred to by like references, and in which:

FIG. 1 is a block diagram showing a hardware circuit configuration by hardware circuit blocks of an optical disc drive device according to a first embodiment of the present invention;

FIG. 2 is a block diagram showing a system controller according to the present embodiment;

FIG. 3 is a partial cross section showing an example of a multi-layer optical disc;

FIG. 4 is a partial side view showing the optical disc, a spindle motor that supports and rotates the optical disc and a base unit of an optical pickup;

FIG. 5 is a flow chart showing a method to derive a calculation formula to calculate a tilt adjustment amount in a case in which direct measurement is possible;

FIG. 6 is a flow chart showing a method to derive a calculation formula to calculate a tilt adjustment amount in a case in which an objective lens is tilted and attached at a time of manufacture; and

FIG. 7 is a flow chart showing a method to estimate tilt correction amounts with respect to a plurality of data recording surfaces of the multi-layer optical disc 2.

Hereinafter, various embodiments of the present invention will be described in detail with reference to the appended drawings. Note that structural elements that have substantially the same function and structure are denoted with the same reference numerals, and repeated explanation of these structural elements in multiple different embodiments is omitted.

Note that the description will be given in the order shown below.

1. First embodiment
2. Second embodiment
3. Benefits of adjusting tilt for L0 layer

1. First embodiment

Configuration of first embodiment

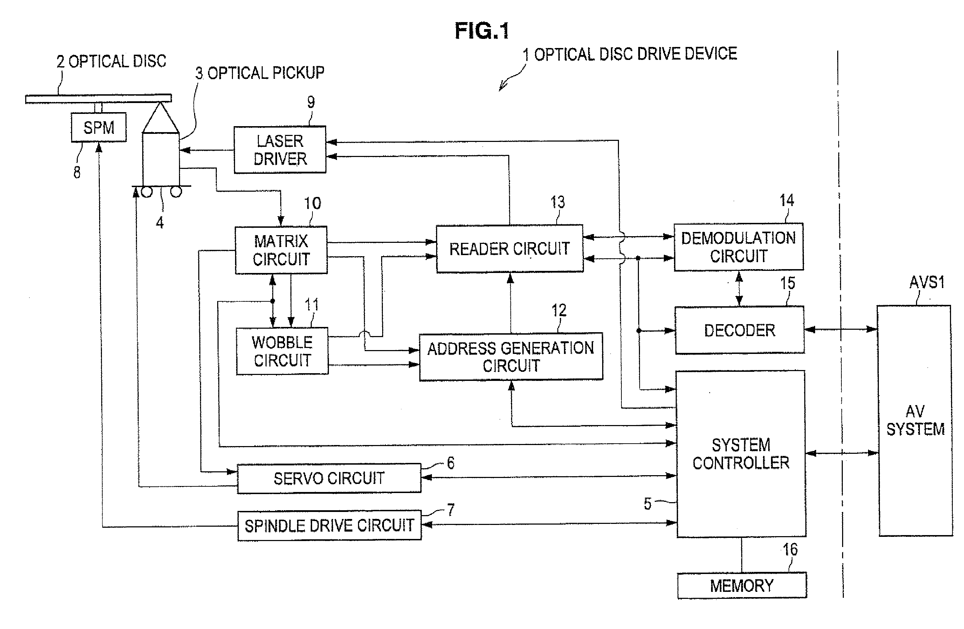

FIG. 1 shows a hardware circuit configuration by hardware circuit blocks of an optical disc drive device 1 according to a first embodiment of the present invention. An optical disc 2 can be internally loaded into the optical disc drive device 1. The optical disc drive device 1 is provided with an optical pickup 3 such that the optical pickup 3 faces a data recording surface of the internally loaded optical disc 2. Further, the optical pickup 3 is held such that it can move, by a thread mechanism 4, in a radial direction of the optical disc 2 (hereinafter referred to as a disc radial direction).

Wobbling (wobbled) grooves (guide grooves) are formed on the data recording surface of the optical disc 2 that is used to reproduce data in the optical disc drive device 1. The grooves are wobbled in advance to have a constant linear velocity and a uniform frequency, for example. The grooves (and lands between the grooves) form tracks on which data is recorded. With respect to the wobbling of the groove, address information (hereinafter referred to as disc address information) in the data recording surface (called address in pre-groove (ADIP) information) is embedded in the optical disc 2.

In the optical disc drive device 1, a system controller 5 that is a microcomputer, for example, performs centralized control of the device as a whole in response to various commands issued from an external audio visual (AV) system AVS1, such as a read command. The system controller 5 also performs a variety of processes. In this way, the system controller 5 enters a start up mode when a power source on command is input in a state in which the optical disc 2 is loaded in the optical disc drive device 1 and the optical disc drive device 1 is activated, or when the optical disc 2 is loaded into the optical disc drive device 1 in a state in which operation is possible after completion of activation (namely, a state in which the power source is on).

At this time, based on control by the system controller 5, a servo circuit 6 drives the thread mechanism 4 and causes the optical pickup 3 to move, for example, to a position facing the innermost periphery of the optical disc 2. Further, based on control by the system controller 5, a spindle drive circuit 7 drives a spindle motor 8 and thus causes the optical disc 2 to rotate at a constant speed. In addition, when the optical disc 2 rotates, a laser driver 9 generates a laser control signal based on control by the system controller 5. The generated laser control signal, which causes a laser beam to be continuously emitted, is transmitted to the optical pickup 3.

When the optical pickup 3 receives the laser control signal from the laser driver 9, based on the laser control signal, the optical pickup 3 causes a laser beam to be continuously emitted from a laser diode and causes the emitted laser beam to be focused on an objective lens and to irradiate the data recording surface of the optical disc 2. Further, using a plurality of light receiving elements, for example, the optical pickup 3 receives and photoelectrically converts reflected light that is obtained when the laser beam is reflected by the data recording surface of the optical disc 2. In this way, the optical pickup 3 generates signals (hereinafter referred to as photoelectric signals) of an electric current value corresponding to an amount of reflected light received by each of the plurality of light receiving elements, and transmits the photoelectric signals to a matrix circuit 10.

When the matrix circuit 10 receives the photoelectric signals generated by the plurality of light receiving elements from the optical pickup 3, after converting each of the photoelectric signals into a voltage value, the matrix circuit 10 selectively uses the voltage values to perform matrix calculation processing, amplification processing and the like. In this way, based on the photoelectric signals, the matrix circuit 10 generates a focus error signal that indicates to what degree a focus of the laser beam is correct with respect to the data recording surface of the optical disc 2.

Furthermore, based on the photoelectric signals, the matrix circuit 10 generates a tracking error signal that indicates to what degree an irradiation position of the laser beam is correct with respect to a track of the data recording surface of the optical disc 2. The matrix circuit 10 then transmits the focus error signal and the tracking error signal to the servo circuit 6.

It should be noted that, at this time, based on the control of the system controller 5, the servo circuit 6 generates a focus search signal and transmits the focus search signal to the optical pickup 3. The focus search signal is generated in order to search for a desired position of the objective lens such that the laser beam is correctly focused on the data recording surface of the optical disc 2. In this way, the servo circuit 6 uses the focus search signal to cause the objective lens of the optical pickup 3 to move along the optical axis, to gradually move closer to the data recording surface of the optical disc 2, for example. At this time, based on the focus error signal supplied from the matrix circuit 10, a focus pull-in operation is performed such that the laser beam is correctly focused on the data recording surface.

Then, when this type of focus pull-in operation is completed, the servo circuit 6, based on focus error signals that are continuously supplied from the matrix circuit 10, generates a focus control signal and transmits the focus control signal to the optical pickup 3. In this way, the servo circuit 6 causes the laser beam to be focused on the data recording surface of the optical disc 2 by using the focus control signal to appropriately move the objective lens of the optical pickup 3, in a direction along the optical axis such that it approaches (namely, moves closer to) the data recording surface of the optical disc 2 (this direction is hereinafter referred to as an approaching direction) and in an opposing direction such that it separates (namely, moves away) from the data recording surface (this direction is hereinafter referred to as a distancing direction). By doing this, the servo circuit 6 forms a focus servo loop with the optical pickup 3 and the matrix circuit 10, and thus tracks the focus of the laser beam with respect to the data recording surface of the optical disc 2.

Further, based on the control of the system controller 5, the servo circuit 6 generates a track search signal, which is generated in order to align an irradiation position of the laser beam on a track on the data recording surface of the optical disc 2, and transmits the track search signal to the optical pickup 3. In this way, the servo circuit 6 uses the track search signal to gradually move the objective lens of the optical pickup 3 in the disc radial direction, for example. At this time, based on the tracking error signal supplied from the matrix circuit 10, a track pull-in operation of the laser beam is performed such that the irradiation position of the laser beam is aligned on the track of the data recording surface.

Then, when this type of track pull-in operation of the laser beam is completed, the servo circuit 6, based on tracking error signals that are continuously supplied from the matrix circuit 10, generates a tracking control signal and transmits the tracking control signal to the optical pickup 3. In this way, the servo circuit 6 causes the laser beam to be irradiated onto a track of the optical disc 2 by using the tracking control signal to appropriately move the objective lens of the optical pickup 3 in the disc radial direction. By doing this, the servo circuit 6 forms a tracking servo loop with the optical pickup 3 and the matrix circuit 10, and thus tracks an irradiation position of the laser beam with respect to the track of the optical disc 2.

Furthermore, when the focus pull-in operation and the track pull-in operation are complete, after converting each of the plurality of photoelectric signals supplied from the optical pickup 3 into a voltage value, the matrix circuit 10 selectively uses the voltage values to perform matrix calculation processing, amplification processing and the like. In this way, in addition to generating the focus error signal and the tracking error signal based on the photoelectric signals, the matrix circuit 10 also generates a wobble signal that indicates an amplitude of the wobbling of the grooves formed on the optical disc 2 (hereinafter referred to as a wobble amplitude). The matrix circuit 10 then transmits the wobble signal to a wobble circuit 11.

The wobble circuit 11 demodulates the wobble signal supplied from the matrix circuit 10 and generates stream data in order to detect disc address information. The wobble circuit 11 transmits the stream data to an address generating circuit 12. The address generating circuit 12 performs decoding processing on the stream data supplied from the wobble circuit 11, and transmits disc address information obtained as a result of the decoding processing to the system controller 5.

In this way, the system controller 5 can detect the irradiation position of the laser beam with respect to the data recording surface of the optical disc 2 in accordance with the disc address information supplied from the address generating circuit 12. Note that the system controller 5 is in a state in which it can detect and obtain the irradiation position of the laser beam with respect to the data recording surface of the optical disc 2 as the disc address information, for example, and then, when a read command is issued from the AV system AVS1, the system controller 5 transfers from the start up mode to a reproduction mode.

At this time, when address information indicating a data read start position is specified by the AV system AVS1, the system controller 5 causes the disc address information supplied from the address generating circuit 12 at that time (namely, the irradiation position of the laser beam with respect to the data recording surface of the optical disc 2 at that point in time) to be compared with the address information indicating the read start position, and generates a seek command signal as necessary. The system controller 5 then transmits the seek command signal to the servo circuit 6.

When the servo circuit 6 receives the seek command signal from the system controller 5, the servo circuit 6 temporarily disengages the tracking servo loop. Then, the servo circuit 6 generates a seek control signal based on the seek command signal, and transmits the seek control signal to the thread mechanism 4. The servo circuit 6 thus drives the thread mechanism 4 using the seek control command signal, and causes the optical pickup 3 to perform a seek operation such that it skips a plurality of tracks in the disc radial direction.

It should be noted that when the system controller 5 cases the optical pickup 3 to perform the seek operation in the disc radial direction, it generates a track jump command signal and transmits the track jump command signal to the servo circuit 6. When the servo circuit 6 receives the track jump command signal from the system controller 5, based on the track jump command signal, the servo circuit 6 generates a jump control signal while the tracking servo loop is in the disengaged state, and transmits the jump control signal to the thread mechanism 4.

The servo circuit 6 thus drives the thread mechanism 4 using the jump control command signal and causes the optical pickup 3 to move slightly in the disc radial direction, thus pulling the irradiation position of the laser beam to a track that includes the data read start position of a reproduction target on the optical disc 2. Note that, when the pulling of the irradiation position of the laser beam with respect to the track is completed, the servo circuit 6 once more forms the tracking servo loop.

In addition, at that time, the system controller 5 specifies a readout output value for the laser beam to the laser driver 9. Thus, in accordance with the command of the system controller 5, the laser driver 9 generates a laser control signal in order to continuously emit the laser beam at the readout output value, and transmits the laser control signal to the optical pickup 3.

In this way, based on the laser control signal supplied from the laser driver 9, the optical pickup 3 causes the laser beam to be continuously emitted from the laser diode at the readout output value. The emitted laser beam is focused on the objective lens and irradiated onto the data recording surface of the optical disc 2. Further, using the plurality of light receiving elements, the optical pickup 3 receives and photoelectrically converts reflected light that is obtained when the laser beam is reflected by the data recording surface of the optical disc 2. In this way, the optical pickup 3 generates photoelectric signals and then transmits the photoelectric signals to the matrix circuit 10.

When the matrix circuit 10 receives the plurality of photoelectric signals from the optical pickup 3, after converting each of the photoelectric signals into a voltage value, the matrix circuit 10 selectively uses the voltage values to perform matrix calculation processing, amplification processing and the like. In this way, based on the photoelectric signals, the matrix circuit 10 generates the focus error signal, the tracking error signal and the wobble signal. In addition, the matrix circuit 10 also generates a high frequency signal (hereinafter referred to as an RF signal) that corresponds to data of the reproduction target. Then, in addition to transmitting the focus error signal and the tracking error signal to the servo circuit 6 and transmitting the wobble signal to the wobble circuit 11, the matrix circuit 10 also transmits the RF signal to a reader circuit 13.

The reader circuit 13 performs binary processing on the RF signal supplied from the matrix circuit 10, and transmits modulated data obtained as a result of the binary processing to a demodulation circuit 14. In addition, the reader circuit 13 uses the RF signal at that time to perform phase locked loop (PLL) processing, and thus generates an operation clock for reproduction processing (hereinafter referred to as a reproduction operation clock). The reader circuit 13 then supplies the reproduction operation clock to other portions.

The demodulation circuit 14 operates in synchronization with the reproduction operation clock supplied from the reader circuit 13. Then, the demodulation circuit 14 performs demodulation processing, such as run length limited decoding processing, on the modulation data supplied from the reader circuit 13, and transmits encoded data obtained as a result to a decoder 15.

The decoder 15 also operates in synchronization with the reproduction operation clock supplied from the reader circuit 13 at that time. Then, on each unit block of the encoded data supplied from the demodulation circuit 14 to which an error correcting code is added, for example, the decoder 15 performs error detection/correction processing and decoding processing such as deinterleave processing. The decoder 15 thus generates the reproduction target data and stores the generated data in an internal buffer.

In addition, in accordance with a command from the AV system AVS1, each time the decoder 15 stores in the buffer data corresponding to a predetermined number of unit blocks, such as four unit blocks, for example, the decoder 15 reads out the data of the predetermined number of unit blocks from the buffer and transmits the data to the AV system AVS1. In this way, the system controller 5 can reproduce data recorded on the data recording surface of the optical disc 2 and transfer the data to the AV system AVS1.

It should be noted that at this time, based on the reproduction operation clock supplied from the reader circuit 13, for example, the spindle drive circuit 7 detects a current rotation speed of the spindle motor 8. Further, the spindle drive circuit 7 causes the current rotation speed to be compared with a preset reference speed, for example, that causes the optical disc 2 to be rotated at a constant linear velocity. The spindle drive circuit 7 thus generates a spindle error signal that indicates to what degree the rotation speed of the spindle motor 8 matches the reference speed.

Then, based on the spindle error signal, the spindle drive circuit 7 generates a spindle control signal, and transmits the spindle control signal to the spindle motor 8. The spindle drive circuit 7 causes the spindle motor 8 to rotate using the spindle control signal in this way, and thus causes the optical disc 2 to rotate at the constant linear velocity.

The optical pickup 3 has light receiving elements that are used to monitor the output of the laser beam (hereinafter, these are referred to particularly as monitoring light receiving elements). For that reason, the optical pickup 3 receives and photoelectrically converts some of the reflected light that is obtained when the laser beam is reflected by the data recording surface of the optical disc 2, using the monitoring light receiving elements. Thus, the optical pickup 3 generates a laser beam output monitoring signal (hereinafter referred to as an output monitoring signal) and transmits the output monitoring signal to the laser driver 9.

The laser driver 9 has an auto power control (APC) circuit. As a result, while controlling the laser diode of the optical pickup 3, the laser driver 9 feeds the output monitoring signal supplied from the optical pickup 3 to the APC circuit. In this way, the laser driver 9 uses the APC circuit to monitor the output of the laser beam based on the output monitoring signal, and appropriately adjusts a value of the laser control signal, thus performing control such that the laser beam is output at a constant readout output, regardless of changes in ambient temperature etc.

Furthermore, while the laser beam is being irradiated onto the data recording surface of the optical disc 2, the servo circuit 6 generates a thread control signal based on a thread error signal, which is obtained, for example, as a low-frequency component of the tracking error signal. The servo circuit 6 transmits the thread control signal to the thread mechanism 4. The servo circuit 6 thus drives the thread mechanism 4 using the thread control signal and causes the optical pickup 3 to gradually move in the disc radial direction. In this way, the servo circuit 6 can cause the reproduction target data to be read from the data recording surface of the optical disc 2 along the track.

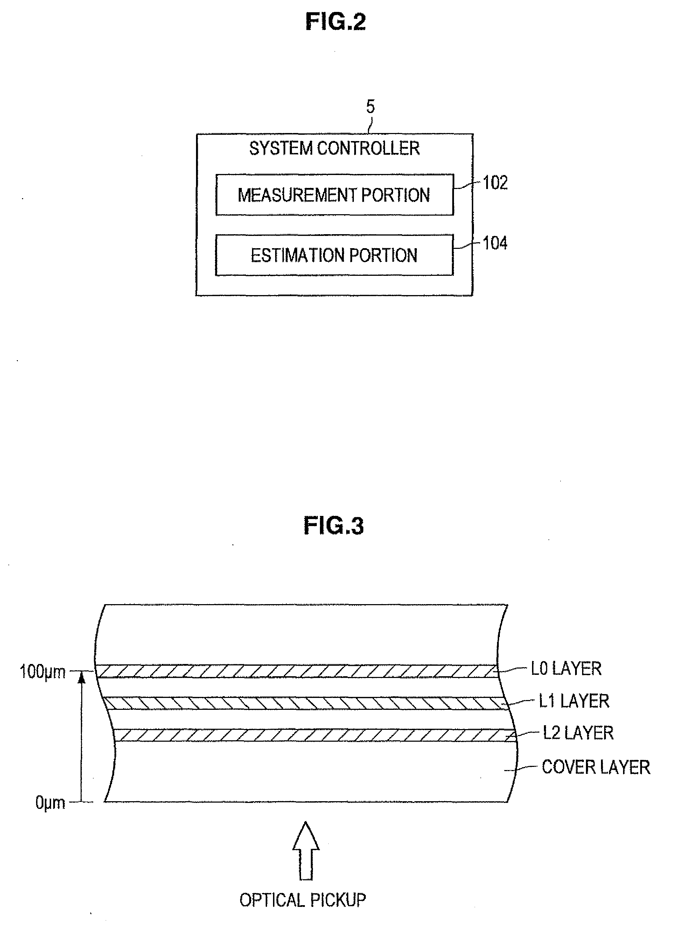

Next, the system controller 5 of the optical disc drive device 1 according to the present embodiment will be explained with reference to FIG. 2. FIG. 2 is a block diagram showing the system controller 5 according to the present embodiment.

As shown in FIG. 2, the system controller 5 includes a measurement portion 102 and an estimation portion 104.

The measurement portion 102 is an example of an adjustment portion, and adjusts a tilt with respect to one of the data recording surfaces among a plurality of the data recording surfaces of the optical disc 2. Further, the measurement portion 102 is an example of an adjustment amount measurement portion, and calculates, from a result of adjusting the tilt, a tilt adjustment amount for one of the data recording surfaces. Note that in the tilt adjustment, the objective lens of the optical pickup 3 is tilted and adjusted such that coma aberration is reduced, by detecting the optical axis direction of the laser beam and the like. Known technology can be used for the tilt adjustment, and a detailed explanation is omitted in the present specification.

The estimation portion 104 is an example of an acquisition portion, and acquires coma aberration of the optical disc drive device 1 and of the optical pickup 3 itself. The estimation portion 104 may measure the coma aberration of the objective lens and acquire the coma aberration. Alternatively, when the objective lens is tilted and fixed at the time of manufacturing the optical pickup 3, the estimation portion 104 may measure the remaining coma aberration as the lens tilt and may acquire the coma aberration.

The estimation portion 104 is an example of a calculation portion. Based on the measured tilt adjustment result amount and/or an estimated tilt adjustment amount for another of the layers and on the coma aberration, the estimation portion 104 calculates a tilt adjustment amount for another of the layers.

Operation of first embodiment

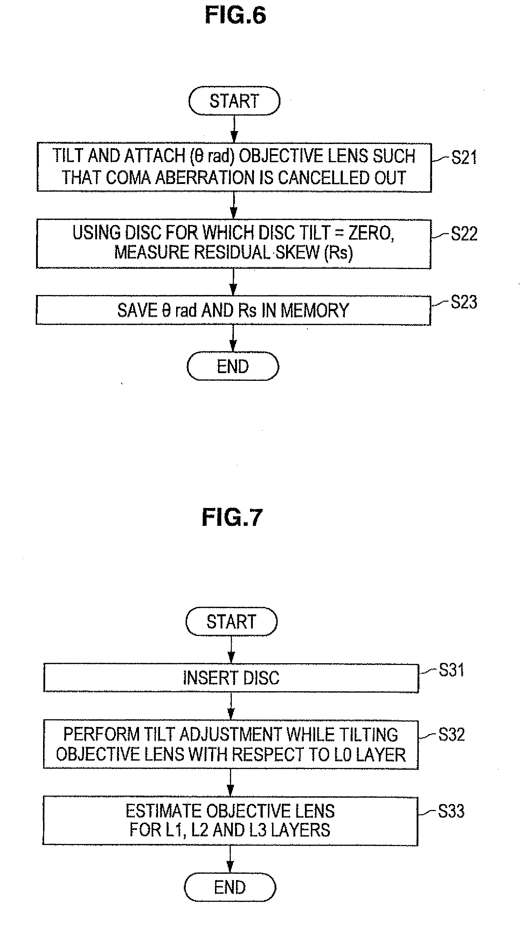

Next, a method to estimate a tilt correction amount for the plurality of data recording surfaces of the multi-layer optical disc 2 according to the present embodiment will be explained. FIG. 7 is a flow chart showing a method to estimate a tilt correction amount for the plurality of data recording surfaces of the multi-layer optical disc 2. In the present embodiment, a method is shown in which the tilt adjustment is performed by tilting the objective lens. Note that a similar method can be adopted even when tilt adjustment is performed using members other than the objective lens, such as liquid crystal elements.

First, the multi-layer optical disc 2 is inserted into the optical disc drive device 1 (step S31). By doing this, preparations begin to record data onto the multi-layer optical disc 2 or to reproduce data on the multi-layer optical disc 2. Hereinafter, as preparation for recording or for reproduction, the tilt adjustment will be explained.

More specifically, tilt adjustment is performed (step S32) on a certain single layer (an L0 layer, for example), of the plurality of data recording surfaces of the multi-layer optical disc 2. As coma aberration occurs due to the tilt of the objective lens of the optical pickup 3 and to the tilt of the optical disc 2, the coma aberration can be reduced by tilting the objective lens.

Then, when the adjustment is complete, a tilt adjustment result amount [deg] is acquired, which indicates an angle of tilt of the objective lens for tilt adjustment for the certain single layer.

Next, an initial coma aberration Ic, which is estimated or calculated in advance, is read out from a memory 16.

Then, based on the acquired tilt adjustment result amount and on the initial coma aberration Ic, the tilt adjustment amount for each of the other layers (an L1 layer, an L2 layer and an L3 layer, for example) is estimated (step S33). The tilt adjustment amount is an angle [deg] at which the objective lens is tilted for the tilt adjustment with respect to the other layers. As will be described later, if the tilt adjustment result amount is acquired for the certain single layer, it is possible to estimate the tilt adjustment amount for one of the other layers, and if the tilt adjustment amount can be estimated for the one of the other layers, the tilt adjustment amount can be estimated for a further one of the other layers.

Then, when data is actually written onto or read from the data recording surface, the objective lens is tilted based on the estimated tilt adjustment amount for each of the layers, and data is recorded onto the multi-layer optical disc 2 or data on the multi-layer optical disc 2 is reproduced.

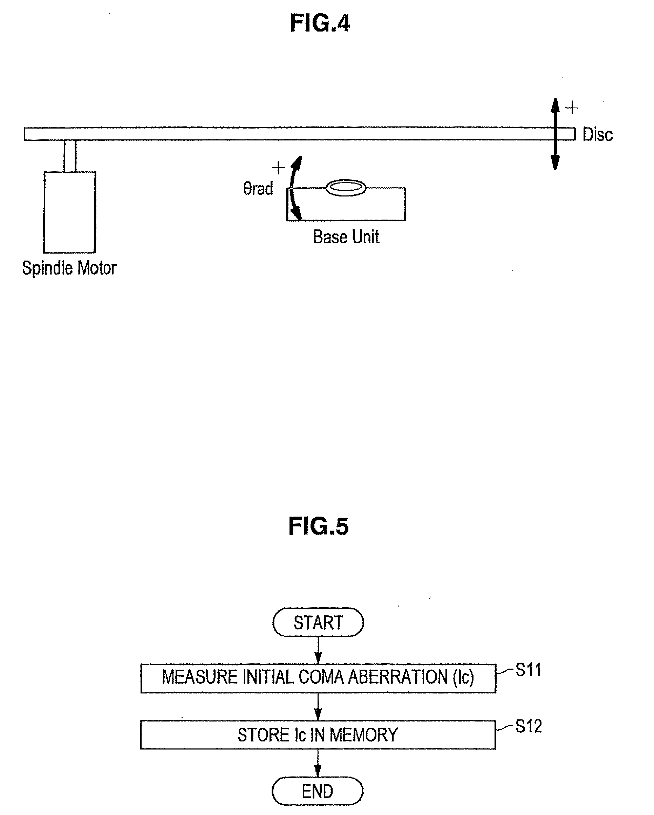

Next, a method to estimate or calculate the initial coma aberration Ic and a method to calculate the tilt adjustment amount will be explained. The initial coma aberration Ic is the coma aberration caused by the objective lens or the like, which occurs at the time of manufacture of the optical pickup 3. FIG. 5 is a flow chart showing a method to derive a calculation formula to calculate the tilt adjustment amount in a case in which direct measurement is possible. FIG. 6 is a flow chart showing a method to derive a calculation formula to calculate the tilt adjustment amount in a case in which the objective lens is tilted and attached at the time of manufacture.

There are two patterns for the initial coma aberration Ic, namely a case in which the initial coma aberration Ic can be directly measured (a first working example) and a case in which, when the objective lens is tilted and attached at the time of manufacture, the remaining coma aberration is measured as lens tilt, and the initial coma aberration Ic is calculated (a second working example).

In the first working example, when the initial coma aberration Ic is acquired, the initial coma aberration Ic is stored in the memory 16. In the second working example, instead of the initial coma aberration Ic, parameters are stored in advance in the memory 16 that are used to calculate the initial coma aberration Ic. The parameters are read out and the initial coma aberration Ic is calculated.

An error [λ rms] after the objective lens is tilted and adjusted is as shown in Formula I below:

[Formula 1]
$$Error = DTs_{Li} Dt + Ic - LTs_{Li} TLi_{adj} \qquad \text{Formula 1}$$

Here, Dt is a skew amount [deg] of the loaded multi-layer optical disc 2.

The initial coma aberration Ic is the coma aberration [λ rms] that is unique to the optical pickup 3. The initial coma aberration Ic is defined as plus when its direction is the same as the direction of aberration that occurs when Dt is tilted as shown in FIG. 4.

$TLi_{adj}$ is an angle [deg] at which the objective lens is tilted and adjusted for an Li layer.

$LTs_{Li}$; is a conversion factor to convert from a lens tilt [deg] to the coma aberration [λ rms]. The above conversion factor $LTs_{Li}$ is calculated by simulation at the time of design of the objective lens and by actual measurement of the objective lens.

$Dts_{Li}$ is a conversion factor to convert from a disc tilt [deg] to the coma aberration [λ rms], and is expressed by Formula 2.

[Formula 2]
$$\frac{t}{2} \frac{(N^2 - 1)N^2 \sin Dt \cos Dt}{(N^2 - \sin^2 Dt)^{\frac{5}{2}}} NA^3 \qquad \text{Formula 2}$$

Here, the disc thickness is t, the refractive index is N and the numerical aperture is NA.

First working example: case in which initial coma aberration can be directly measured

A case will be described in which the coma aberration caused by the objective lens that is unique to the optical pickup 3 can be directly measured at the time of manufacture etc. of the optical pickup 3, namely a case in which the initial coma aberration Ic can be directly obtained.

First, the initial coma aberration Ic is measured (step S11). Methods to directly measure the initial coma aberration Ic include, for example, a method that uses an interferometer, such as a Mach-Zehnder interferometer, or a method that uses a Shack-Hartmann wave front sensor and so on.

If the layer for which the tilt adjustment result amount or the tilt adjustment amount has been obtained is taken as a base layer (Lb), the layer for which the tilt adjustment amount is to be estimated is a target layer (Lt).

Here, when the tilt adjustment can be completely performed by tilting the objective lens, both sides of Formula 1 are zero (0). In other words, the following Formula 3 is obtained.

[Formula 3]

$$\begin{cases} 0 = DTs_{Lt}Dt + Ic - LTs_{Lt}TLt_{adj} \\ 0 = DTs_{Lb}Dt + Ic - LTs_{Lb}TLb_{adj} \end{cases} \qquad \text{Formula 3}$$

If Dt is removed from the above Formula 3, the following Formula 4 is obtained.

[Formula 4]

$$TLt_{adj} = A\,TLb_{adj} + B\,Ic \qquad \text{Formula 4}$$

Here, the factors A and B are expressed by the following Formula 5.

[Formula 5]

$$A = \frac{DTs_{Lt}}{DTs_{Lb}}\frac{LTs_{Lb}}{LTs_{Lt}},\ B = \frac{1}{LTs_{Lt}}\left(\frac{DTs_{Lb} - DTs_{Lt}}{DTs_{Lb}}\right), \qquad \text{Formula 5}$$

Thus, the tilt adjustment amount for the target layer (namely, the angle to which the objective lens is tilted and adjusted with respect to the target layer) can be calculated from Formula 4. The tilt adjustment amount can be calculated from the base layer tilt adjustment result amount or tilt adjustment amount and the initial coma aberration Ic.

Second working example: case in which, at time of manufacture, objective lens is tilted and attached in order to increase a range of the tilt correction amount and remaining coma aberration can be measured as lens tilt.

The second working example is applied when the initial coma aberration Ic of the objective lens etc. to be measured is large. When the initial coma aberration Ic is small, when a disc for which the disc skew is zero [deg] is inserted, the objective lens need not be tilted. On the other hand, when the initial coma aberration Ic is large, even when the disc for which the disc skew is zero [deg] is inserted, it is necessary to apply a voltage and tilt the objective lens. For example, in a case in which a voltage that is applied in order to cancel out the initial coma aberration Ic is 100 [mV] and the applicable voltage is ± 200 [mV], only a further 100 [mV] can be applied on the plus side, and, with respect to a disc with a large degree of skew, tilt adjustment may become impossible.

In order to solve the above problem, at the time of manufacture of the optical pickup 3, the objective lens is tilted and attached such that the initial coma aberration Ic is cancelled out (step S21). The tilt angle is set as 0 rad [deg]. Further, with respect to the disc with zero disc tilt, a residual disc tilt amount Rs (a residual skew Rs) after attachment of the objective lens is measured (step S22). In this case, at the time of manufacture etc. of the optical pickup 3, the initial coma aberration Ic of the objective lens etc. that is unique to the optical pickup 3 is expressed by the following Formula 6.

$$Ic = LTs_{L0}\,0rad + DTs_{L0}\,Rs \qquad \text{Formula 6}$$

This indicates that when the objective lens is completely tilted and adjusted, both sides of the above-described Formula 1 become zero. In other words, the following Formula 7 is obtained.

[Formula 7]

$$\begin{cases} 0 = DTs_{Lt} Dt + Ic - LTs_{Lt}\left(TLt_{adj} - \theta rad\right) \\ 0 = DTs_{Lb} Dt + Ic - LTs_{Lb}\left(TLb_{adj} - \theta rad\right) \\ Ic = LTs_{L0}\theta rad + DTs_{L0} Rs \end{cases} \qquad \text{Formula 7}$$

If Ic and Dt are removed, the following Formula 8 is obtained.

[Formula 8]

$$TLt_{adj} = A\, TLb_{adj} + B\,\theta rad + C\, Rs_{L0} \qquad \text{Formula 8}$$

Here, the factors A, B and C are expressed by the following Formula 9.

[Formula 9]

$$A = \frac{DTs_{Lt}}{DTs_{Lb}}\frac{LTs_{Lb}}{LTs_{Lt}},\ C = \frac{DTs_{L0}}{LTs_{Lt}}\left(1 - \frac{DTs_{Lt}}{DTs_{Lb}}\right),$$
$$B = \frac{LTs_{L0}}{LTs_{Lt}} - 1 - \frac{DTs_{Lt}}{DTs_{Lb}}\frac{\left(LTs_{L0} + LTs_{Lb}\right)}{LTs_{Lt}}, \qquad \text{Formula 9}$$

The tilt adjustment amount for the target layer (namely, the angle to which the objective lens is tilted and adjusted with respect to the target layer) can be calculated from Formula 9. The tilt adjustment amount can be calculated from the Base layer tilt adjustment result amount or tilt adjustment amount, the θ rad [deg] angle at the time at which the objective lens is tilted and attached, and the residual disc tilt amount Rs after the objective lens is attached.

At the time of manufacture, respective values of the methods of the first working example or the second working example are stored in the memory (step S12 or step S23).

After that, when the disc is inserted (step S31), tilt adjustment with respect to the L0 layer is performed, for example (step S32). Following that, tilt adjustment values for the other layers L1, L2 and L3 can be sequentially estimated (step S33). In other words, $TLt_{adj}$, which is calculated using Formula 4 or Formula 8 with respect to a certain layer, is substituted for $TLb_{adj}$ in Formula 4 or Formula 8 when $TLt_{adj}$ of a next layer is calculated. By repeating this, the tilt adjustment values of the plurality of layers can be sequentially calculated.

In the above manner, according to the present embodiment, after adjusting the tilt for one layer, it is possible to estimate the tilt adjustment for the remaining layers, and as a result, tilt adjustment time can be reduced. Furthermore, as initial coma aberration is taken into account, a tilt adjustment performance can be improved.

2. Second embodiment

An explanation will now be made of a case in which an even greater degree of accuracy of tilt adjustment is desired than in the first embodiment. Specifically, in the second embodiment, a tilt adjustment amount for another single layer is estimated from two layers.

For example, when tilt adjustment is performed for the two layers L0 and L1, the L0 layer tilt adjustment amount can be calculated from two variables, namely (1) the tilt adjustment result amount for the L0 layer obtained as a result of the tilt adjustment for the L0 layer, and (2) the L0 layer tilt adjustment amount that is estimated from the L1 layer tilt adjustment amount, using the method described in the first embodiment.

In this case, the tilt adjustment amount for the L0 layer, which is estimated from the adjustment error of the L0 layer itself and the L1 layer, can be calculated to have a minimum error, by calculating a ratio for averaging based on adjustment variations of the L1 layer and an error estimate obtained by multiplying respective factors of a measurement error of the initial coma aberration. Then, the calculated ratio is used to calculate the tilt adjustment amount for the L0 layer, resulting in improved adjustment accuracy.

Further, the L2 layer can be estimated and obtained from the L0 layer, or can be estimated and obtained from the L1 layer.

3. Benefits of adjusting tilt for L0 layer

Next, an explanation will be made as to why it is better to perform tilt adjustment for the L0 layer rather than for the other layers. As shown in FIG. 3, when seen from a surface on the side of the optical pickup 3 (namely, from a surface on a side of incidence of the laser), the L0 layer is positioned in a deep position of the optical disc 2, namely in a position that has thickness. The layers become closer to the surface on the side of the optical pickup 3 in an order of L1, L2, L3. The L0 layer is positioned at a depth of 100 $\mu$m, for example, from a surface of the optical disc 2 and the other layers are arranged to be mutually adjacent with an interval of 10 $\mu$m or more. LTs$_{Li}$ is close to a value that is inversely proportionate to the disc thickness, while DTs$_{Li}$ is close to a value that is proportionate to the disc thickness.

For example, taking as an example the L0 layer and the L1 layer, the following three assumptions are postulated. Coma aberration is the same for the L0 layer tilt adjustment error and for the L1 layer tilt adjustment error.

Ic measurement accuracy is good and measurement error is zero (of course, an Ic value varies for each individual difference).

[Formula 10]

$$LTs_{Li} = \alpha / t_{Li}, \quad DTs_{Li} = \beta t_{Li}$$

If it is assumed that L0 adjustment accuracy is 0.1 degrees for disc tilt conversion of L0, the objective lens conversion accuracy for L0 is expressed in Formula 11 below.

[Formula 11]

$$0.1 \frac{\alpha}{t_{L0}^2}$$

Then, objective lens conversion accuracy for L1 is as expressed in Formula 12.

[Formula 12]

$$0.1 \frac{\alpha}{t_{L0} t_{L1}}$$

Here, estimated error from L0 to L2 is as expressed in Formula 13.

[Formula 13]

$$eTL2_{adj} = A (TL0_{adj} + eTL0_{adj}) + B (Ic + eIc) - \{A\, TL0_{adj} + B\, Ic\}$$

Here, eTLO$_{adj}$ is adjustment error and eIc is Ic measurement error. Furthermore, if it is now assumed that eIc = 0, Formula 14 is obtained.

$$eTL2_{adj} = \frac{DTs_{L2}}{DTs_{L0}} \frac{LTs_{L0}}{LTs_{L2}} eTL0_{adj}$$

$$= \frac{t_{L2}^2}{t_{L0}^2} eTL0_{adj}$$

$$= 0.1 \frac{t_{L2}^2}{t_{L0}^2} \frac{\alpha}{t_{L0}^2}$$

Similarly, estimated error from L1 to L2 is as expressed in Formula 15.

[Formula 15]

$$eTL2_{adj} = \frac{DTs_{L2}}{DTs_{L1}} \frac{LTs_{L1}}{LTs_{L2}} eTL1_{adj}$$

$$= 0.1 \frac{t_{L2}^2}{t_{L1}^2} \frac{\alpha}{t_{L0} t_{L1}}$$

Therefore, as the thickness of the L0 layer is larger than the thickness of the L1 layer, the adjustment error is smaller. This difference is as expressed in Formula 16.

[Formula 16]

$$\frac{t_{L1}^3}{t_{L0}^3}$$

In other words, the adjustment error becomes smaller when estimation is performed from a layer with a larger thickness.

The example embodiment is described in detail above with reference to the accompanying drawings. However, the present invention is not limited to the examples described above. It should be understood by those skilled in the art that various modifications, combinations, sub-combinations and alterations may occur depending on design requirements and other factors insofar as they are within the scope of the appended claims or the equivalents thereof.

For example, in the above-described first and second embodiments, a case is described in which the playback device according to the present invention is applied to the optical disc drive device 1. However, the present approach is not limited to this example and may be widely applied to recording/playback devices of a variety of other structures, such as information processing devices that can record data onto an optical disc or that can reproduce data on the optical disc, including a personal computer or game console, a car navigation device, a television receiver and the like.

Further, in the above-described first and second embodiments, the system controller 5 performs a variety of processing in accordance with a variety of programs. The programs may be stored in advance in a ROM on the optical disc drive device 1, or the programs may be installed using a program storage medium. Then, the program storage medium causes the programs to be installed in the optical disc drive device 1 and to be in an executable state. The program storage medium may be a package medium, such as a flexible disc, a CD-ROM or a DVD, for example. Alternatively, the program storage medium may be a semi-conductor memory or a magnetic disc or the like, on which the variety of programs are temporarily or permanently stored. Furthermore, as a method to store the programs on this type of program storage medium, a wired or wireless communication medium may be used, such as a local area network, the Internet or digital satellite broadcasting etc. Alternatively, the programs may be stored via a variety of communication interfaces, such as a router or a modem etc.

In so far as the embodiments of the invention described above are implemented, at least in part, using software-controlled data processing apparatus, it will be appreciated that a computer program providing such software control and a transmission, storage or other medium by which such a computer program is provided are envisaged as aspects of the present invention.

**Claims**

1. A playback device comprising:

   an adjustment portion that, based on a first data recording surface among a plurality of data recording surfaces of an optical recording medium, adjusts tilt with respect to the first data recording surface;
   an adjustment amount measurement portion that measures a first tilt adjustment amount from a result of the tilt adjustment;
   an acquisition portion that acquires a coma aberration of the playback device; and
   a calculation portion that, based on the first tilt adjustment amount and the coma aberration, calculates a second tilt adjustment amount to adjust tilt with respect to a second data recording surface that is different to the first data recording surface.

2. The playback device according to claim 1,
   wherein the calculation portion, based on the first tilt adjustment amount, the second tilt adjustment amount and the coma aberration, calculates a third tilt adjustment amount to adjust tilt with respect to a third data recording surface that is different to the first data recording surface and the second data recording surface.

3. The playback device according to claim 1 or 2,
   wherein the acquisition portion acquires the coma aberration by directly measuring coma aberration of an objective lens of the playback device.

4. The playback device according to any preceding claim,
   wherein when an objective lens is tilted and fixed, the acquisition portion measures remaining coma aberration as lens tilt and acquires the coma aberration.

5. The playback device according to any preceding claim,
   wherein the calculation portion, based on the second tilt adjustment amount and the coma aberration, calculates a third tilt adjustment amount to adjust tilt with respect to a third data recording surface that is different to the first data recording surface and the second data recording surface.

6. A playback method, comprising the steps of:

   adjusting tilt with respect to a first data recording surface, based on the first data recording surface among a plurality of data recording surfaces of an optical recording medium;
   measuring a first tilt adjustment amount from a result of the tilt adjustment;
   acquiring a coma aberration of the playback device; and
   calculating a second tilt adjustment amount to adjust tilt with respect to a second data recording surface based on the first tilt adjustment amount and the coma aberration, the second data recording surface being different to the first data recording surface.

7. A program comprising instructions that command a computer to perform the steps of:

   adjusting tilt with respect to a first data recording surface, based on the first data recording surface among a plurality of data recording surfaces of an optical recording medium;
   measuring a first tilt adjustment amount from a result of the tilt adjustment;
   acquiring a coma aberration of the playback device; and
   calculating a second tilt adjustment amount to adjust tilt with respect to a second data recording surface based on the first tilt adjustment amount and the coma aberration, the second data recording surface being different to the first data recording surface.

**FIG.1**

1 OPTICAL DISC DRIVE DEVICE

2 OPTICAL DISC

3 OPTICAL PICKUP

SPM

9 LASER DRIVER

10 MATRIX CIRCUIT

11 WOBBLE CIRCUIT

13 READER CIRCUIT

12 ADDRESS GENERATION CIRCUIT

14 DEMODULATION CIRCUIT

15 DECODER

6 SERVO CIRCUIT

7 SPINDLE DRIVE CIRCUIT

5 SYSTEM CONTROLLER

16 MEMORY

AVS1

AV SYSTEM

# FIG.2

5

SYSTEM CONTROLLER

MEASUREMENT PORTION — 102

ESTIMATION PORTION — 104

# FIG.3

100μm

L0 LAYER

L1 LAYER

L2 LAYER

COVER LAYER

0μm

OPTICAL PICKUP

# FIG.4

# FIG.5

## FIG.6

```
                    ┌──────────┐
                    │  START   │
                    └──────────┘
                          │
                          ▼
┌─────────────────────────────────────────────┐
│ TILT AND ATTACH (θ rad) OBJECTIVE LENS SUCH  │───S21
│  THAT COMA ABERRATION IS CANCELLED OUT       │
└─────────────────────────────────────────────┘
                          │
                          ▼
┌─────────────────────────────────────────────┐
│   USING DISC FOR WHICH DISC TILT = ZERO,     │───S22
│      MEASURE RESIDUAL SKEW (Rs)              │
└─────────────────────────────────────────────┘
                          │
                          ▼
┌─────────────────────────────────────────────┐
│       SAVE θ rad AND Rs IN MEMORY            │───S23
└─────────────────────────────────────────────┘
                          │
                          ▼
                    ┌──────────┐
                    │   END    │
                    └──────────┘
```

## FIG.7

```
                    ┌──────────┐
                    │  START   │
                    └──────────┘
                          │
                          ▼
┌─────────────────────────────────────────────┐
│                INSERT DISC                   │───S31
└─────────────────────────────────────────────┘
                          │
                          ▼
┌─────────────────────────────────────────────┐
│  PERFORM TILT ADJUSTMENT WHILE TILTING       │───S32
│  OBJECTIVE LENS WITH RESPECT TO L0 LAYER     │
└─────────────────────────────────────────────┘
                          │
                          ▼
┌─────────────────────────────────────────────┐
│        ESTIMATE OBJECTIVE LENS               │───S33
│        FOR L1, L2 AND L3 LAYERS              │
└─────────────────────────────────────────────┘
                          │
                          ▼
                    ┌──────────┐
                    │   END    │
                    └──────────┘
```

Europäisches
Patentamt

European
Patent Office

Office européen
des brevets

**EUROPEAN SEARCH REPORT**

Application Number

EP 11 16 6077

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2010/016226 A1 (PANASONIC CORP [JP]; YAMASAKI FUMITOMO; MORI EISHIN) 11 February 2010 (2010-02-11) * see the passages of the US document cited for language reasons * | 1-7 | INV. G11B7/095 G11B7/135 |
| X,P | -& US 2010/246343 A1 (YAMASAKI FUMITOMO [JP] ET AL) 30 September 2010 (2010-09-30) * paragraph [0103] - paragraph [0111] * * figure 11 * * paragraph [0100] * ----- | 1-7 | |
| A | US 2007/104045 A1 (NAGURA CHIHIRO [JP]) 10 May 2007 (2007-05-10) * the whole document * ----- | 1-7 | |

| | |
|---|---|
| | TECHNICAL FIELDS SEARCHED (IPC) |
| | G11B |

The present search report has been drawn up for all claims

| Place of search | Date of completion of the search | Examiner |
|---|---|---|
| The Hague | 4 October 2011 | Menck, Anja |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

    ...........................................................................

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 11 16 6077

This annex lists the patent family members relating to the patent documents cited in the above-mentioned European search report.
The members are as contained in the European Patent Office EDP file on
The European Patent Office is in no way liable for these particulars which are merely given for the purpose of information.

04-10-2011

| Patent document cited in search report | | Publication date | Patent family member(s) | | Publication date |
|---|---|---|---|---|---|
| WO 2010016226 | A1 | 11-02-2010 | CN<br>US | 102084419 A<br>2010246343 A1 | 01-06-2011<br>30-09-2010 |
| US 2010246343 | A1 | 30-09-2010 | CN<br>WO | 102084419 A<br>2010016226 A1 | 01-06-2011<br>11-02-2010 |
| US 2007104045 | A1 | 10-05-2007 | JP | 2007133967 A | 31-05-2007 |

EPO FORM P0459

For more details about this annex : see Official Journal of the European Patent Office, No. 12/82

**EP 2 402 947 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2005209283 A